# EUROPEAN PATENT SPECIFICATION

(11) **EP 2 610 741 B1**
(45) Date of publication and mention of the grant of the patent: **04.01.2017**
(21) Application number: 12007774.8
(22) Date of filing: 16.11.2012
(51) Int. Cl.: G06F 9/44, G06F 9/54

(54) **Frontend-backend communication decision based on business object metadata**
Frontend-Backend-Kommunikationsentscheidung basierend auf Geschäftsobjekt-Metadaten
Décision de communication frontale-arrière-plan basée sur des métadonnées d'objets commerciaux

(30) Priority: 30.12.2011 US 201113341230
(43) Date of publication of application: 03.07.2013
(73) Proprietor: SAP SE, 69190 Walldorf (DE)
(72) Inventor: Brunswig, Frank, 69190 Walldorf (DE); Jentsch, Frank, 69190 Walldorf (DE); Said, Bare, 69190 Walldorf (DE)
(74) Representative: Müller-Boré & Partner Patentanwälte PartG mbB

(56) References cited:
- EP-A1- 2 182 475
- US-A1- 2007 143 242
- US-A1- 2009 265 716

## Description

### TECHNICAL FIELD

This description is directed generally to metadata models, and in particular, to a frontend-backend communication decision based on business object metadata.

### BACKGROUND

Document EP 2 182 475 A1 discloses receiving a request originating at a frontend server for data encapsulated in a plurality of business objects. The plurality of business objects is stored in a business object layer at the backend server remote from the frontend server. In addition, the request originates from a user interface layer and is received at a controller layer. A controller object is instantiated in the controller layer at the backend server. Nodes of the controller object are mapped to nodes in the plurality of business objects so that the controller object encapsulates the request data. Thereafter, transmission of data response to the request encapsulated by the controller object to the frontend server is initiated. Related apparatus, systems, techniques and articles are also described.

Document US 2009/0265716 A1 discloses a system for providing a feature to a software application which comprises an intercepting component and a service providing component. The service providing component comprises code adapted for providing said feature to said application. The intercepting component comprises code adapted for intercepting a first user interaction with said application and communicating the intercepted user interaction to the service providing component. The code of the service providing component is adapted to provide said feature to said application by communicating, to said application, a simulation of at least one second user interaction with said application, based upon the intercepted first user interaction communicated by the intercepting component.

Business object models may define structure and behavior of one or more corresponding data objects. For example, a M1 model may define a specific structure (e.g., hierarchical nodes and associated fields or attributes) and behavior (e.g., one or more enabled services) for a specific type of business object.

Business objects are real world entities modeled as objects in an information system. Business objects encapsulate both data structures and the functions or services applied to the data, while hiding their full complexity from other objects. This encapsulation of data and functions/services makes it easier to modify program components by allowing one to program with the relevant entities without having to know all the implementation details. Business objects also allow for the reuse of existing functions.

### SUMMARY

In one general aspect, a computer program product is provided. The computer program product is tangibly embodied on a computer-readable storage medium and includes executable code that, when executed, is configured to cause at least one data processing apparatus to provide a user interface from a runtime user interface (UI) application running on a frontend server to a client application; receive, by the runtime UI application from a business application running on a backend server, a business object that includes metadata associated with the user interface; receive, by the runtime UI application from the client application, user input associated with a business transaction, the user input including an input of a first field for the user interface; determine, by the runtime UI application based on the business object, whether processing by the business application of the first field input is required to determine and output to the client application an updated second field of the user interface before completion of the business transaction; and trigger a round-trip communication between the runtime UI application and the business application to process the first field and determine the updated second field before completion of the business transaction if the processing is required by the business application to determine and output the updated second field before completion of the business transaction.

In another general aspect, a computer implemented method is provided that includes providing a user interface from a runtime user interface (UI) application running on a frontend server to a client application; receiving, by the runtime UI application from a business application running on a backend server, a business object that includes metadata associated with the user interface; receiving, by the runtime UI application from the client application, user input associated with a business transaction, the user input including an input of a first field for the user interface; determining, by the runtime UI application based on the business object, whether processing by the business application of the first field input is required to determine and output to the client application an updated second field of the user interface before completion of the business transaction; and triggering a round-trip communication between the runtime UI application and the business application to process the first field and determine the updated second field before completion of the business transaction if the processing is required by the business application to determine and output the updated second field before completion of the business transaction.

In another general aspect, an apparatus includes providing logic configured to provide a user interface from a runtime user interface (UI) application running on a frontend server to a client application; receiving logic configured to receive, by the runtime UI application from a business application running on a backend server, a business object that includes metadata associated with the user interface; the receiving logic further configured to receive, by the runtime UI application from the client application, user input associated with a business transaction, the user input including an input of a first field for the user interface; determining logic configured to determine, by the runtime UI application based on the business object, whether processing by the business application of the first field input is required to determine and output to the client application an updated second field of the user interface before completion of the business transaction; and triggering logic configured to trigger a round-trip communication between the runtime UI application and the business application to process the first field and determine the updated second field before completion of the business transaction if the processing is required by the business application to determine and output the updated second field before completion of the business transaction.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described herein.

In addition, the subject matter described herein may also be implemented as a system including a processor and a memory coupled to the processor. The memory may encode one or more programs that cause the processor to perform one or more of the method acts described in this specification.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram illustrating a system according to an example implementation in which a frontend-backend communication decision is made based on a business object.
FIG. 2 is a block diagram of a system according to an example implementation.
FIG. 3 is a flow chart illustrating operation of a system according to an example implementation.

### DETAILED DESCRIPTION

In the following, a detailed description of examples will be given with reference to the drawings. It should be understood that various modifications to the examples may be made. In particular, elements of one example may be combined and used in other examples to form new examples.

According to an example implementation, both stateful and stateless communication or transactions are supported. In an example implementation, in a stateless communication or transaction, backend processing for the transaction is not typically performed during the transaction, while backend processing is or may be performed during a stateful communication or transaction. Also, frontend-backend communication may be performed during a stateful communication or transaction. Some applications may require a stateful communication or transaction, while other applications may not necessarily require stateful transaction or communication. In such cases, stateless communication may be sufficient. Processor, memory and network resources may be conserved where a stateless communication or transaction may be used. In an example stateless communication or transaction, backend processing may be delayed, and frontend-backend communication may be suspended until after the end of a transaction. Therefore, according to an example implementation, an application (e.g., runtime UI application) running on a frontend server may determine, based on a business object, whether frontend-backend communication may be suspended until after completion of the transaction.

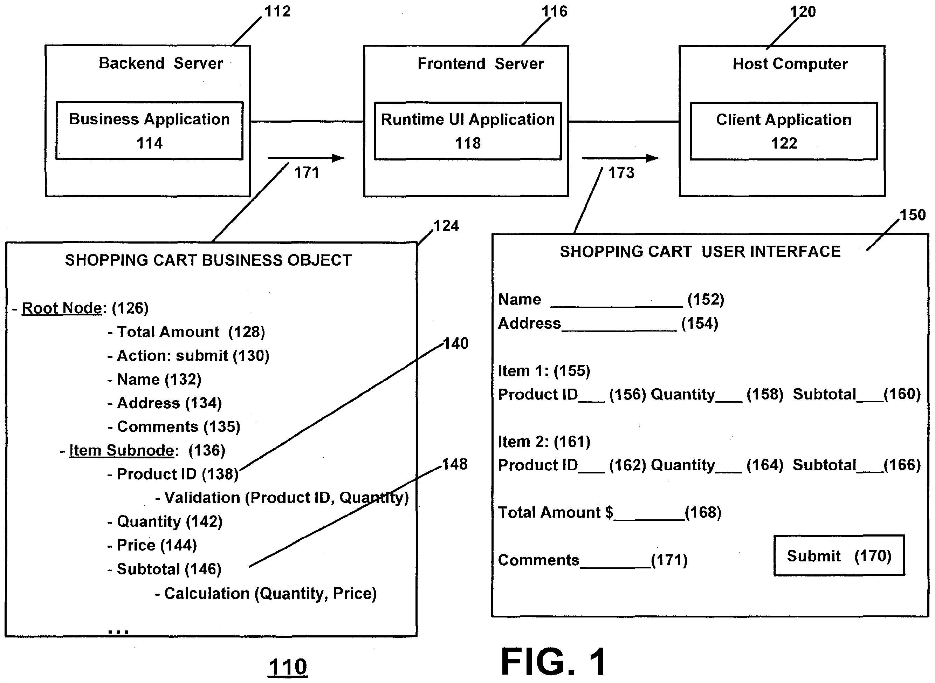

FIG. 1 is a block diagram illustrating a system according to an example implementation in which a frontend-backend communication decision is made based on a business object. System 110 may include a backend server 112, a frontend server 116, and a host computer 120, where frontend server 116 is in communication with host computer 120 and backend server 112 via one or more networks, e.g., Internet, LAN (local area network), and/or wireless network, or other network.

Backend server 112 may include a business application 114 for processing data. Backend server 112 also includes a database (not shown) or other data structure for storing data models, such as M1 models. Data models may define structure and behavior of one or more corresponding data objects. For example, a M1 model may define a specific structure (e.g., hierarchical nodes and associated fields or attributes) and behavior (e.g., one or more enabled services, methods or actions) for a specific type of business object. In an example implementation, backend server 112 may store different types of M1 models or business objects. For example, different types of business objects may be stored by backend server 112, such as an invoice business object (e.g., defining structure and behavior for invoice instances), a customer business object (defining structure and behavior for customer instances), and a shopping cart business object (defining structure and behavior for shopping cart instances). Each M0 instance of a M1 model follows the structure and behavior of the corresponding M1 model. For business objects, each instance of a business object follows the structure and behavior defined by the corresponding business object.

As shown in FIG. 1, system 110 may also include a frontend server 116 that may communicate with backend server 112 and/or business application 114. Frontend server 116 may include a runtime user interface (UI) application 118 that may communicate with business application 114. Runtime UI application 118 may also communicate with one or more client applications, such as with client application 122 that is running on host computer 120. Runtime UI application 118 may provide a user interface to a client application 122 that is running on a host computer 120. Different types of user interfaces may be provided to client application 122. For example, runtime UI application 118 may provide a shopping cart user interface 150 via line 173 to client application 122 to allow a user of client application 122 to request and purchase various products.

According to an example implementation, in a stateful process or stateful business transaction, communications may typically occur between the runtime UI application of the frontend server and the business application on the backend server before completion of the business transaction to allow the business application to perform various tasks or processing and to provide information back to the runtime UI application. The backend processing by the business application may be performed to allow the runtime UI application to provide updates to a client application for one or more fields of a user interface based on the backend processing, e.g., to check product inventory and provide an error message if a requested item is not in stock, to calculate and provide item subtotals, or to provide calculated shipping charges for a specific user shipping preference and zip code.

Business application 114 may perform various types of data processing for or on behalf of runtime UI application 118, such as validations and calculations, as examples. For example, after receipt of user input from client application 122 and before completion of a business transaction, the runtime UI application 118 may forward user input (e.g., product IDs and quantity of items to be purchased, user shipping preferences, etc.) to the business application 114. The business application 114 may then perform a consistency validation, such as a product validation, by confirming that the selected quantity of the identified product(s) are available in stock or inventory. Business application 114 may store or may have access to a database that stores product inventory information, including quantities of each product that are currently in stock. Other types of data validation may be performed as well. Runtime UI application 118 may also receive from business application 114 an error message that an item (having a specific product ID) is not in stock, and runtime UI application 118 may forward or output such error message within a field of user interface 150 to client application 122.

The business application 114 may also perform one or more calculations for the runtime UI application 118, such as, for example, calculating shipping charges (e.g., based on user shipping preference and user address or zip code), $ subtotals for each product (e.g., as quantity x price), and a total purchase amount including a sum of all product subtotals, shipping charges and taxes. The business application 114 may then provide this information to the runtime UI application 118 (e.g., confirming quantity in stock for each product ID, and the calculated shipping charges, subtotals, taxes and total amount due), and the runtime UI application may then provide this information to the client application via an updated user interface 150. Thus, for example, backend processing by business application 114 may be important when runtime UI application 118 needs to provide feedback (e.g., error messages) or other information, such as updated fields (e.g., taxes, shipping amount, total amount) to the client application 122, where such feedback or UI fields must be determined or calculated by business application 114.

However, providing one or more roundtrip communications between the frontend server 116 and backend server 112 during a business transaction may consume significant memory and processing resources on the backend server 112 and frontend server 116, and may consume significant network or communication resources. In addition, some types of business transactions may not require immediate processing by the business application 114, or may not require that immediate feedback be provided to the client application 122 prior to completion of the business transaction. In such cases where business application processing or associated feedback to the client application 122 is not required prior to completion of the business transaction, such business application processing may be delayed or deferred, and frontend-backend communication may be suspended, until after completion of the business transaction.

Therefore, according to an example implementation, frontend-backend communication between runtime UI application 118 on the frontend server 116 and the business application 114 on the backend server 112 is performed before completion of a business transaction when necessary, and such frontend-backend communication is suspended until after completion of the business transaction when it is not necessary for such communication to be performed before completion of the business transaction.

According to an example implementation, runtime UI application 118 may determine, based on nodes and/or attributes provided in a business object 124 corresponding to user interface 150, whether or not processing by business application 114 is required to update one or more fields of user interface 150 before completion of a business transaction. If processing is required by business application 114 to update one or more fields of a user interface before completion of a business transaction, then a round-trip communication may be triggered (e.g., by the runtime UI application 118) between the runtime UI application 118 and the business application 114 so that business application 114 may perform the requested processing and runtime UI application 118 may then output one or more updated fields of user interface 150 to client application 122.

On the other hand, if processing is not required by business application 114 in order to update a field within the user interface before completion of the business transaction, then the runtime UI application 118 may temporarily cease or suspend communications between the runtime UI application 118 and the business application 114 in order to conserve resources. In such case, communication between the runtime UI application 118 and the business application 114 may be resumed after completion of the business transaction (e.g., frontend-backend communication may resume after runtime UI application 118 receives a "submit" request or other request from client application 122 to complete the business transaction). For example, after completion of the business transaction is detected by the runtime UI application 118, the runtime UI application 118 may then forward data inputs received from the client application via the user interface to the business application 114 so that the order, as described by the completed shopping cart user interface 150 submitted to runtime UI application 118 from client application 122, may be processed by business application 114 so that, for example, items purchased by the user may be shipped to the user at the address listed on the user interface.

According to an example implementation, a user interface 150 may be provided from a runtime user interface (UI) application 118 running on a frontend server 116 to a client application 122. The runtime UI application 118 may receive from a business application 114 running on a backend server 112, a business object 124 that includes metadata (e.g., nodes, and fields/attributes) associated with the user interface. The runtime UI application 118 may receive from the client application 122, user input associated with a business transaction, the user input including an input of a first field for the user interface. The user input may include product IDs and quantity of items to be purchased, user shipping preferences, etc. Thus, user input associated with the business transaction may include parameters or values that provide specifics of the business transaction, i.e. values that determine how the business transaction will be processed.

The runtime UI application 118 may determine based on the business object, whether processing by the business application 114 of the first field input is required to determine and output to the client application 122 an updated second field of the user interface before completion of the business transaction. The runtime UI application 118 may trigger (or cause the occurrence of) a round-trip communication between the runtime UI application 118 and the business application 114 to process the first field and determine the updated second field before completion of the business transaction if the processing is required by the business application 114 to determine and output the updated second field before completion of the business transaction.

Referring to FIG. 1, several examples and further details will now be described. A shopping cart business object 124 may be retrieved by the runtime UI application 118 from the backend server 112 and/or business application 114. Shopping cart business object 124 may define the structure (e.g., nodes, and fields/attributes) and behavior (e.g., one or more methods, services or actions) of one or more shopping cart instances, for example. While a shopping cart business object 124 is shown by way of example, any type of business object may be provided or used. Shopping cart business object 124 may include a root node 126 with several fields or attributes, such as: a total amount 126 that may identify a total amount of the purchase, an action 130, such as a "submit" action 130 to allow a user to submit a completed shopping cart for processing, a name 132 of the user or customer, an address 134 of the user or customer, and comments 135. Attributes in the root node may be provided once, for example. Other attributes or fields may be provided within root node 126.

As also shown in FIG. 1, the shopping cart business object 124 may include one or more subnodes, for which there may be several instances of each subnode in a shopping cart instance. As an example, an item subnode 136 is provided that may include several fields or attributes, and/or sub-attributes. Subnode 136 may define or include several fields or attributes, such as a product ID 138 that identifies a product to be purchased, a quantity 142 of the product that is being purchased corresponding to the product ID, a price 144 of the product, and a subtotal 146 that identifies the subtotal amount for the product.

As shown in FIG. 1, a shopping cart user interface 150 is shown, and may be provided by runtime UI application 118 to client application 122. A user, via client application 122, may input data for one or more fields and return this data for the user interface 150 to runtime UI application 118. For example, shopping cart user interface 150 may include a name 152 (e.g., name of customer or user), an address 154 (e.g., shipping address of customer), a total amount 168, a shipping amount 169, and comments 171 where a user or customer may input comments regarding their purchase. A submit button 170 may be selected to submit the user interface, or to submit a request to complete the business transaction based on the data input to the fields of user interface 150. Fields for one or more items or products to be purchased may be input as well, such as for example: Item 1 155 may include a product ID 156, a quantity 158, and a subtotal 160. Item 2 may include a product ID 162, a quantity 164, and a subtotal for the item 166.

Each of the fields of user interface 150 may have a corresponding attribute within shopping cart business object 124. For example, Name 152, address 154 of user interface 150 correspond to name 132 and address 134, respectively, of shopping cart business object 124. Submit button 170 on user interface 150 corresponds to a submit action 130 of business object 150. Total amount 168 of user interface corresponds to total amount attribute 128 of business object 124. Product ID 156, quantity 158 and subtotal 160 of user interface 150 may correspond to product ID 138, quantity 142 and subtotal 146 of business object 124. Comments field 171 of user interface 150 corresponds to comments 135 of business object 124.

Referring to the business object 124 in FIG. 1, according to an example implementation, the presence of some metadata, e.g., the presence of some nodes, attributes, and sub-attributes in the business object 124 indicates that processing by the business application 114 is required, e.g., to update one or more fields of a corresponding user interface prior to completion of a business transaction. Thus, metadata associated with a user interface that is included in the business object 124 may indicate that one or more fields of the user interface need to be updated prior to completing the business transaction.

According to an example implementation, required processing by the business application 114 prior to completion of the business transaction may be indicated by the presence of a sub-attribute for an attribute, such as, for example, a validation sub-attribute 140 for product ID 138 (meaning that validation by the business application 114 of product ID 138 is required) or a calculation sub-attribute 148 of subtotal 148 (meaning that a calculation of subtotal 146 by the business application 114 is required before completion of the transaction). Other fields, attributes or sub-attributes or other indications may be used within the business object 124 to indicate to runtime UI application that business application processing (e.g. updating one or more fields of the user interface) is required prior to completion of the business transaction.

The validation sub-attribute 140 identifies in parentheses the attributes upon which the validation depends, e.g., product ID 138 and quantity 142 in this example, which may be referred to as dependent attributes. This means that validation of the product ID 138 is performed by business application 114 based on the two dependent attributes (product ID 138 and quantity 142). Thus, validation of product ID 138 should be performed if runtime UI application 118 receives (e.g., new or updated) user inputs for product ID 156 and quantity 158 via user interface 150. As noted, product ID 156 and quantity 158 of user interface 150 correspond to dependent attributes product ID 138 and quantity 142 in business object 124. For example, if a use changes a quantity 158 of a product, then validation should be performed again by business application to confirm that the quantity is in stock, for example. Likewise, the calculation sub-attribute 148 identifies in parentheses the dependent attributes upon which the calculation depends, e.g., quantity 142 and price 144. The calculation 148 of subtotal 146 should be performed or re-performed if runtime UI application 118 receives new or changed values for either of the dependent attributes (quantity, price) for the calculation 148. In other words, if a quantity of items or price of an item changes (or is received), the corresponding subtotal 146, 160 will need to be re-calculated.

According to an example implementation, business application 114 may be required to perform validation or calculation only if one of the respective dependent attributes is received or changed (e.g., by a user or by the business application), for example. For example, a user or client application 122 may change a quantity, while business application 114 may change the price of an item. In one example implementation, if a user input is received b y runtime UI application 118 for one of the dependent attributes for validation 140 or calculation 148 in the business object, then a round-trip communication between the runtime UI application 118 and business application 114 is triggered to allow business application 114 to perform such validation or calculation. Otherwise, if no such validation or calculation is required before end of the business transaction, e.g., either 1) no validation or calculation sub-attributes present in business object 124, or 2) no inputs or changes have been received to any of the dependent attributes in the business object for such validation 140 or calculation 148 sub-attributes, or 3) user interface 150 does not display any of the validated or calculated values or attributes (e.g., product ID 156 and/or subtotal 160 are not displayed to the user via user interface 150), then communication between the runtime UI application 118 and the business application 114 may be suspended until end of the business transaction. A validation example and a calculation example will be briefly described.

Within the shopping cart business object 124, product ID 138 may include a validation sub-attribute 140 indicating that validation of the product ID 138 by the business application 114 is required prior to completion of the business transaction, according to an example embodiment. As shown in the validation sub-attribute 140, the validation is performed based on two dependent attributes including the product ID 138 and the quantity 142 of item subnode 136. Thus, if a user inputs or changes either quantity 158 (corresponding to quantity 142 in business object 124) and/or product ID 156 (corresponding to product ID 138 in business object 124) via user interface 150, then the runtime UI application 118 may examine the shopping cart business object 124 to determine if any business application processing is required prior to completion of the business transaction based on these changed or input attributes or fields.

Validation sub-attribute 140 indicates that the product ID 138 should be validated (based on input of quantity and/or product ID) or re-validated (e.g., if a new quantity was input by a user) to confirm that the requested quantity of the identified product (identified by the product ID) is in stock. Thus, to do this, a validation request is sent from the runtime UI application 118 to the business application 114, where the validation request may include at least the new or updated user inputs for product ID and quantity. The business application 114 may then search a database, for example, and determine if the quantity of the product is in stock. Business application 114 may then send a reply to the runtime UI application 118 indicating if the quantity of product is in stock or not. If the quantity of the requested product is not in stock, an error message may be forwarded from the business application 114 to the runtime UI application 118, and this error message may be output by the runtime UI application 118 via the user interface to the client application 122.

In a similar manner, a calculation sub-attribute 148 may be provided for subtotal 146, meaning that a calculation or recalculation of the item subtotal 146 by business application 114 should be performed if any of the dependent attributes for calculation 148 (quantity 142, price 144) are received from or changed by a user or client application 122 via the user interface (since the recalculated subtotal 160 is displayed to the user during the business transaction via user interface 150). If the recalculated subtotal 160 was not present in the UI 150 or was not displayed to the user before completion of the business transaction, the backend processing by business application 114 could be delayed until after completion of the business transaction (e.g., continue suspending frontend-backend communications). Thus, for example, if the quantity 142 of products has been changed for this item subnode 136, e.g., by a user inputting or changing the quantity in the corresponding displayed quantity field 158 of the shopping cart user interface 150, then this would cause runtime UI application 118 to determine if any business application processing should be performed based on this change. In this case, the runtime UI application 118 would detect the presence of the calculation sub-attribute 148, and that the quantity 142 is a dependent attribute for calculation 148. Thus, runtime UI application 118 would trigger a roundtrip communication from the runtime UI application 118 and the business application 114 to allow business application 114 to perform the requested calculation of the subtotal based on the received or changed quantity 142 and price 144 for this item subnode 136.

As noted above, changes or inputs by a user may for some fields of a UI may cause runtime UI application 118 to trigger a roundtrip communication with the business application, e.g., to perform processing such as validation or a calculation. However, other changes or input may not necessarily trigger a roundtrip communication between the runtime UI application 118 and the business application 114. For example, a user may input some text in the comments field 171 of the user interface 150. The comments attribute 135 of business object 124 does not have a validation or calculation sub-attribute, in the example business object 124 shown in FIG. 1. Therefore, based on the absence of such validation or calculation sub-attribute for the comments attribute 135 in business object 124, the runtime UI application 118 may determine that no business application validation or calculation is required based on the received comments in comment field 171. In such case, the frontend-backend communications may continue to be suspended until end of the business transaction, for example. This is because, the business application 114 has no interest in performing a spell check or other validation on the comments received via comments field 171, according to an example implementation.

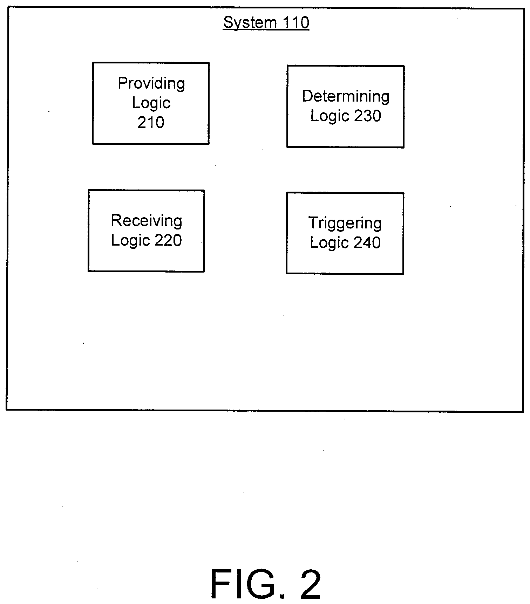

FIG. 2 is a block diagram of a system according to an example implementation. Providing logic 210 provides a user interface from a runtime user interface (UI) application running on a frontend server to a client application. Receiving logic 220 is configured to receive, by the runtime UI application from a business application running on a backend server, a business object that includes metadata associated with the user interface. The receiving logic 220 is configured to receive, by the runtime UI application from the client application, user input associated with a business transaction, the user input including an input of a first field for the user interface. Determining logic 230 is configured to determine, by the runtime UI application based on the business object, whether processing by the business application of the first field input is required to determine and output to the client application an updated second field of the user interface before completion of the business transaction. Triggering logic 240 is configured to trigger a round-trip communication between the runtime UI application and the business application to process the first field and determine the updated second field before completion of the business transaction if the processing is required by the business application to determine and output the updated second field before completion of the business transaction.

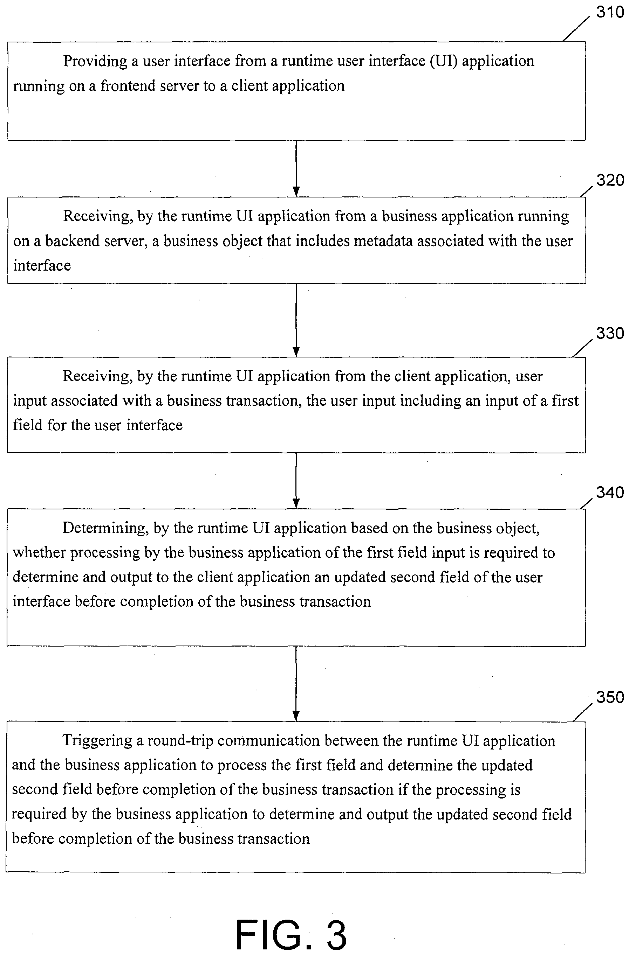

FIG. 3 is a flow chart illustrating operation of a system according to an example implementation. Operation 310 may include providing a user interface from a runtime user interface (UI) application running on a frontend server to a client application. Operation 320 may include receiving, by the runtime UI application from a business application running on a backend server, a business object that includes metadata associated with the user interface. Operation 330 may include receiving, by the runtime UI application from the client application, user input associated with a business transaction, the user input including an input of a first field for the user interface. Operation 340 may include determining, by the runtime UI application based on the business object, whether processing by the business application of the first field input is required to determine and output to the client application an updated second field of the user interface before completion of the business transaction. Operation 350 may include triggering a round-trip communication between the runtime UI application and the business application to process the first field and determine the updated second field before completion of the business transaction if the processing is required by the business application to determine and output the updated second field before completion of the business transaction.

The method illustrated in FIG. 3 may further include temporarily suspending or ceasing communication between the runtime UI and the business application until after completion of the business transaction if the processing is not required by the business application to determine and output the updated second field before completion of the business transaction.

In the method of FIG. 3, the determining, by the runtime UI based on the business object, whether processing by the business application of the first field input is required to determine and output to the client application an updated second field of the user interface before completion of the business transaction may include: determining, by the runtime UI application based on the business object, whether a validation of the first field by the business application is required before completion of the business transaction.

In the method of FIG. 3, the determining, by the runtime UI based on the business object, whether processing by the business application of the first field input is required to determine and output to the client application an updated second field of the user interface before completion of the business transaction may include: determining, by the runtime UI application based on the business object, whether a calculation is required to be performed by the business application to determine the updated second field of the user interface based on at least the first field before completion of the business transaction.

The method illustrated in FIG. 3 wherein the determining includes: determining, by the runtime UI application based on the business object, whether processing by the business application of the first field input is required to determine an updated second field of the user interface; and if processing by the business application of the first field input is required to determine the updated second field, then determining whether outputting of the updated second field from the runtime UI to the client application is required before completion of the business transaction.

The method illustrated in FIG. 3 may further include: temporarily suspending or ceasing communication between the runtime UI and the business application until after completion of the business transaction if processing by the business application of the first field input is not required or if outputting of the updated second field from the runtime UI to the client application is not required before completion of the business transaction.

The method illustrated in FIG. 3 wherein the completion of the business transaction is indicated to the runtime UI by the runtime UI receiving a request to complete the business transaction from the client application.

The method illustrated in FIG. 3 wherein the completion of the business transaction is indicated to the runtime UI by the runtime UI receiving a from the client application an indication that a user selected a submit request or submit button for the business transaction.

The method illustrated in FIG. 3 and further including performing the roundtrip communication, including: sending a request from the runtime UI application to the business application to process the first field input to obtain the updated second field of the user interface; and receiving a reply by the runtime UI application from the business application that includes the updated second field of the user application.

The method illustrated in FIG. 3 wherein the business object includes one or more nodes, wherein the first field of the user interface corresponds to a first attribute of one of the nodes of the business object, further wherein the business object includes an indication that processing of the first attribute is required by the business application before completion of the business transaction. The method illustrated in FIG. 3 and further wherein a sub-attribute of the first attribute indicates that processing of the first attribute is required by the business application before completion of the business transaction.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program that might implement the techniques mentioned above might be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the embodiments.

## Claims

1. A method comprising:
providing a user interface (150) from a runtime user interface, UI, application (118) running on a frontend server (116) to a client application (122) that is running on a host computer (120);
receiving, by the runtime UI application (118) from a business application (114) running on a backend server (112), a business object (124) that includes metadata associated with the user interface (150);
receiving, by the runtime UI application (118) from the client application (122), user input associated with a business transaction, the user input including an input of a first field for the user interface (150);
determining, by the runtime UI application (118) based on the business object (124), whether processing by the business application (114) of the first field input is required to determine and output to the client application (122) an updated second field of the user interface (150) before completion of the business transaction, wherein the determining comprises determining, by the runtime UI application (118) based on the business object (124), whether a validation of the first field by the business application (114) is required before completion of the business transaction; and
triggering a round-trip communication between the runtime UI application (118) and the business application (114) to process the first field and determine the updated second field before completion of the business transaction if the processing is required by the business application (114) to determine and output the updated second field before completion of the business transaction

2. The method of claim 1, further comprising:
temporarily suspending or ceasing communication between the runtime UI and the business application (114) until after completion of the business transaction if the processing is not required by the business application (114) to determine and output the updated second field before completion of the business transaction.

3. The method of any one of the preceding claims, wherein the determining, by the runtime UI based on the business object (124), whether processing by the business application (114) of the first field input is required to determine and output to the client application (122) an updated second field of the user interface (150) before completion of the business transaction comprises:
determining, by the runtime UI application (118) based on the business object (124), whether a calculation is required to be performed by the business application (114) to determine the updated second field of the user interface (150) based on at least the first field before completion of the business transaction.

4. The method of claim any one of the preceding claims, wherein the determining comprises:
determining, by the runtime UI application (118) based on the business object (124), whether processing by the business application (114) of the first field input is required to determine an updated second field of the user interface (150); and
if processing by the business application (114) of the first field input is required to determine the updated second field, then determining whether outputting of the updated second field from the runtime UI to the client application (122) is required before completion of the business transaction.

5. The method of claim 4, further comprising:
temporarily suspending or ceasing communication between the runtime UI and the business application (114) until after completion of the business transaction if processing by the business application (114) of the first field input is not required or if outputting of the updated second field from the runtime UI to the client application (122) is not required before completion of the business transaction.

6. The method of any one of the preceding claims, wherein the completion of the business transaction is indicated to the runtime UI by the runtime UI receiving a request to complete the business transaction from the client application (122).

7. The method of any one of the preceding claims, wherein the comple-tion of the business transaction is indicated to the runtime UI by the runtime UI receiving a from the client application (122) an indication that a user selected a submit request or submit button (170) for the business transaction.

8. The method of any one of the preceding claims, further comprising performing the roundtrip communication, including:
sending a request from the runtime UI application (118) to the business application (114) to process the first field input to obtain the updated second field of the user interface (150); and
receiving a reply by the runtime UI application (118) from the business application (114) that includes the updated second field of the user application.

9. The method of any one of the preceding claims, wherein the business object (124) includes one or more nodes (126, 136), wherein the first field of the user interface (150) corresponds to a first attribute of one of the nodes (126, 136) of the business object (124), further wherein the business object (124) includes an indication that processing of the first attribute is required by the business application (144) before completion of the business transaction.

10. The method of claim 9, wherein a sub-attribute of the first attribute indicates that processing of the first attribute is required by the business application (114) before completion of the business transaction.

11. A computer program product, the computer program product being tangibly embodied on a computer-readable storage medium and including executable code that, when executed, is configured to cause at least one data processing apparatus (110) to perform a method according to any one of the preceding claims.

12. An apparatus (110) comprising:
providing logic (210) configured to provide a user interface (150) from a runtime user interface, UI, application (118) running on a frontend server (116) to a client application (122) that is running on a host computer (120);
receiving logic (220) configured to receive, by the runtime UI application (118) from a business application (114) running on a backend server (112), a business object (124) that includes metadata associated with the user interface (150);
the receiving logic (220) further configured to receive, by the runtime UI application (118) from the client application (122), user input associated with a business transaction, the user input including an input of a first field for the user interface (150);
determining logic (230) configured to determine, by the runtime UI application (118) based on the business object (124), whether processing by the business application (114) of the first field input is required to determine and output to the client application (122) an updated second field of the user interface (150) before completion of the business transaction, wherein the determining comprises determining, by the runtime UI application (118) based on the business object (124), whether a validation of the first field by the business application (114) is required before completion of the business transaction; and
triggering logic (240) configured to trigger a round-trip communication between the runtime UI application (118) and the business application (114) to process the first field and determine the updated second field before completion of the business transaction if the processing is required by the business application (114) to determine and output the updated second field before completion of the business transaction.

## Patentansprüche

1. Verfahren, umfassend:
Bereitstellen einer Benutzerschnittstelle (150) von einer Laufzeit-Benutzerschnittstelle, UI,-Anwendung (118), die auf einem Frontend-Server (116) läuft, zu einer Client-Anwendung (122), die auf einem Host-Computer (120) läuft;
Empfangen, durch die Laufzeit-UI-Anwendung (118) von einer Geschäftsanwendung (114), die auf einem Backend-Server (112) läuft, eines Geschäftsobjekts (124), das Metadaten enthält, die mit der Benutzerschnittstelle (150) verknüpft sind;
Empfangen, durch die Laufzeit-UI-Anwendung (118) von der Client-Anwendung (122), von Benutzereingabe, die mit einer Geschäftstransaktion verknüpft ist, wobei die Benutzereingabe eine Eingabe eines ersten Felds für die Benutzerschnittstelle (150) enthält;
Bestimmen, durch die Laufzeit-UI-Anwendung (118) basierend auf dem Geschäftsobjekt (124), ob ein Verarbeiten durch die Geschäftsanwendung (114) der Eingabe des ersten Felds erforderlich ist, um ein aktualisiertes zweites Feld der Benutzerschnittstelle (150) zu bestimmen und an die Client-Anwendung (122) auszugeben, und zwar vor Vollendung der Geschäftstransaktion, wobei das Bestimmen ein Bestimmen, durch die Laufzeit-UI-Anwendung (118) basierend auf dem Geschäftsobjekt (124), ob eine Validierung des ersten Felds durch die Geschäftsanwendung (114) vor der Vollendung der Geschäftstransaktion erforderlich ist, umfasst; und
Auslösen einer Roundtrip-Kommunikation zwischen der Laufzeit-UI-Anwendung (118) und der Geschäftsanwendung (114), um das erste Feld zu verarbeiten und das aktualisierte zweite Feld vor Vollendung der Geschäftstransaktion zu bestimmen, falls das Verarbeiten durch die Geschäftsanwendung (114) erforderlich ist, um das aktualisierten zweite Feld vor Vollendung der Geschäftstransaktion zu bestimmen und auszugeben.

2. Verfahren nach Anspruch 1, ferner umfassend:
temporäres Unterbrechen oder Einstellen der Kommunikation zwischen der Laufzeit-UI und der Geschäftsanwendung (114) bis nach der Vollendung der Geschäftstransaktion, falls das Verarbeiten durch die Geschäftsanwendung (114) nicht erforderlich ist, um das aktualisierte zweite Feld vor Vollendung der Geschäftstransaktion zu bestimmen und auszugeben.

3. Verfahren nach einem der vorhergehenden Ansprüche, wobei das Bestimmen, durch die Laufzeit-UI basierend auf dem Geschäftsobjekt (124), ob ein Verarbeiten durch die Geschäftsanwendung (114) der Eingabe des ersten Felds erforderlich ist, um ein aktualisiertes zweites Feld der Benutzerschnittstelle (150) zu bestimmen und an die Client-Anwendung (122) auszugeben, und zwar vor Vollendung der Geschäftstransaktion, umfasst:
Bestimmen, durch die Laufzeit-UI-Anwendung (118) basierend auf dem Geschäftsobjekt (124), ob eine Berechnung von der Geschäftsanwendung (114) durchgeführt werden muss, um das aktualisierte zweite Feld der Benutzerschnittstelle (150) basierend auf zumindest dem ersten Feld vor Vollendung der Geschäftstransaktion zu bestimmen.

4. Verfahren nach einem der vorhergehenden Ansprüche, wobei das Bestimmen umfasst:
Bestimmen, durch die Laufzeit-UI-Anwendung (118) basierend auf dem Geschäftsobjekt (124), ob das Verarbeiten durch die Geschäftsanwendung (114) der Eingabe des ersten Felds erforderlich ist, um ein aktualisiertes zweites Feld der Benutzerschnittstelle (150) zu bestimmen; und
falls das Verarbeiten durch die Geschäftsanwendung (114) der Eingabe des ersten Felds erforderlich ist, um das aktualisierte zweite Feld zu bestimmen, dann Bestimmen, ob das Ausgeben des aktualisierten zweiten Felds von der Runtime-UI an die Client-Anwendung (122) vor der Vollendung der Geschäftstransaktion erforderlich ist.

5. Verfahren nach Anspruch 4, ferner umfassend:
temporäres Unterbrechen oder Einstellen der Kommunikation zwischen der Laufzeit-UI und der Geschäftsanwendung (114) bis nach der Vollendung der Geschäftstransaktion, falls das Verarbeiten durch die Geschäftsanwendung (114) der Eingabe des ersten Felds nicht erforderlich ist oder falls das Ausgeben des aktualisierten zweiten Felds von der Runtime-UI an die Client-Anwendung (122) vor der Vollendung der Geschäftstransaktion erforderlich ist.

6. Verfahren nach einem der vorhergehenden Ansprüche, wobei die Vollendung der Geschäftstransaktion der Runtime-UI angezeigt wird, indem die Runtime-UI eine Aufforderung zur Vollendung der Geschäftstransaktion von der Client-Anwendung (122) empfängt.

7. Verfahren nach einem der vorhergehenden Ansprüche, wobei die Vollendung der Geschäftstransaktion der Runtime-UI angezeigt wird, indem die Runtime-UI von der Client-Anwendung (122) eine Angabe empfängt, dass ein Benutzer einen Senden-Befehl oder Senden-Button (170) für die Geschäftstransaktion gewählt hat.

8. Verfahren nach einem der vorhergehenden Ansprüche, ferner umfassen das Durchführen der Roundtrip-Kommunikation, beinhaltend:
Senden einer Anfrage von der Laufzeit-UI-Anwendung (118) an die Geschäftsanwendung (114), die Eingabe des ersten Felds zu verarbeiten, um das aktualisierte zweite Feld der Benutzerschnittstelle (150) zu erhalten; und Empfangen einer Antwort durch die Laufzeit-UI-Anwendung (118) von der Geschäftsanwendung (114), die das aktualisierte zweite Feld der Benutzeranwendung enthält.

9. Verfahren nach einem der vorhergehenden Ansprüche, wobei das Geschäftsobjekt (124) einen oder mehrere Knoten (126, 136) enthält, wobei das erste Feld der Benutzerschnittstelle (150) einem ersten Attribut eines der Knoten (126, 136) des Geschäftsobjekts (124) entspricht, ferner wobei das Geschäftsobjekt (124) eine Angabe enthält, dass die Verarbeitung des ersten Attributs durch die Geschäftsanwendung (144) vor Vollendung der Geschäftstransaktion erforderlich ist.

10. Verfahren nach Anspruch 9, wobei ein Unterattribut des ersten Attributs angibt, dass die Verarbeitung des ersten Attributs durch die Geschäftsanwendung (144) vor Vollendung der Geschäftstransaktion erforderlich ist.

11. Computerprogrammprodukt, wobei das Computerprogrammprodukt greifbar bzw. gegenständlich auf einem computerlesbaren Speichermedium verkörpert ist und ausführbaren Code enthält, der, wenn ausgeführt, konfiguriert ist, zumindest eine Datenverarbeitungsvorrichtung (110) zu veranlassen, ein Verfahren nach einem der vorhergehenden Ansprüche durchzuführen.

12. Vorrichtung (110), umfassend:
Bereitstellungslogik (210), die konfiguriert ist zum Bereitstellen einer Benutzerschnittstelle (150) von einer Laufzeit-Benutzerschnittstelle,U1,-Anwendung (118), die auf einem Frontend-Server (116) läuft, zu einer Client-Anwendung (122), die auf einem Host-Computer (120) läuft;
Empfangslogik (220), die konfiguriert ist zum Empfangen, durch die Laufzeit-Ul-Anwendung (118) von einer Geschäftsanwendung (114), die auf einem Backend-Server (112) läuft, eines Geschäftsobjekts (124), das Metadaten enthält, die mit der Benutzerschnittstelle (150) verknüpft sind;
wobei die Empfangslogik (220) ferner konfiguriert ist zum Empfangen, durch die Laufzeit-UI-Anwendung (118) von der Client-Anwendung (122), von Benutzereingabe, die mit einer Geschäftstransaktion verknüpft ist, wobei die Benutzereingabe eine Eingabe eines ersten Felds für die Benutzerschnittstelle (150) enthält;
Bestimmungslogik (230), die konfiguriert ist zum Bestimmen, durch die Laufzeit-UI-Anwendung (118) basierend auf dem Geschäftsobjekt (124), ob ein Verarbeiten durch die Geschäftsanwendung (114) der Eingabe des ersten Felds erforderlich ist, um ein aktualisiertes zweites Feld der Benutzerschnittstelle (150) zu bestimmen und an die Client-Anwendung (122) auszugeben, und zwar vor Vollendung der Geschäftstransaktion, wobei das Bestimmen ein Bestimmen, durch die Laufzeit-UI-Anwendung (118) basierend auf dem Geschäftsobjekt (124), ob eine Validierung des ersten Felds durch die Geschäftsanwendung (114) vor der Vollendung der Geschäftstransaktion erforderlich ist, umfasst; und
Auslöselogik (240), die konfiguriert ist zum Auslösen einer Roundtrip-Kommunikation zwischen der Laufzeit-UI-Anwendung (118) und der Geschäftsanwendung (114), um das erste Feld zu verarbeiten und das aktualisierte zweite Feld vor Vollendung der Geschäftstransaktion zu bestimmen,
falls das Verarbeiten durch die Geschäftsanwendung (114) erforderlich ist, um das aktualisierte zweite Feld vor Vollendung der Geschäftstransaktion zu bestimmen und auszugeben.

## Revendications

1. Procédé comprenant :
fournir une interface utilisateur (150) depuis une application d'interface utilisateur, UI, à moteur d'exécution (118) tournant sur un serveur frontal (116) à une application client (122) qui tourne sur un ordinateur hôte (120) ;
recevoir, par l'application UI à moteur d'exécution (118) d'une application commerciale (114) tournant sur un serveur dorsal (112), un objet commercial (124) qui inclut des métadonnées associées à l'interface utilisateur (150) ;
recevoir, par l'application UI à moteur d'exécution (118) de l'application client (122), une saisie d'utilisateur associée à une transaction commerciale, la saisie d'utilisateur incluant une saisie d'un premier champ pour l'interface utilisateur (150) ;
déterminer, par l'application UI à moteur d'exécution (118) en fonction de l'objet commercial (124), si le traitement par l'application commerciale (114) de la première saisie de champ est requis pour déterminer et émettre vers l'application client (122) un second champ mis à jour de l'interface utilisateur (150) avant réalisation de la transaction commerciale, dans lequel la détermination comprend déterminer, par l'application UI à moteur d'exécution (118) en fonction de l'objet commercial (124), si une validation du premier champ par l'application commerciale (114) est requise avant réalisation de la transaction commerciale ; et
déclencher une communication aller-retour entre l'application UI à moteur d'exécution (118) et l'application commerciale (114) pour traiter le premier champ et déterminer le second champ mis à jour avant réalisation de la transaction commerciale si le traitement est requis par l'application commerciale (114) pour déterminer et émettre le second champ mis à jour avant réalisation de la transaction commerciale.

2. Procédé selon la revendication 1, comprenant en outre :
suspendre temporairement ou cesser la communication entre l'UI à moteur d'exécution et l'application commerciale (114) jusqu'après réalisation de la transaction commerciale si le traitement n'est pas requis par l'application commerciale (114) pour déterminer et émettre le second champ mis à jour avant réalisation de la transaction commerciale.

3. Procédé selon l'une quelconque des revendications précédentes, dans lequel la détermination, par l'UI à moteur d'exécution en fonction de l'objet commercial (124), du fait que le traitement par l'application commerciale (114) de la première saisie de champ soit requis pour déterminer et émettre vers l'application client (122) un second champ mis à jour de l'interface utilisateur (150) avant réalisation de la transaction commerciale comprend :
déterminer, par l'application UI à moteur d'exécution (118) en fonction de l'objet commercial (124), si un calcul est requis d'être réalisé par l'application commerciale (114) pour déterminer le second champ mis à jour de l'interface utilisateur (150) en fonction d'au moins le premier champ avant réalisation de la transaction commerciale.

4. Procédé selon l'une quelconque des revendications précédentes, dans lequel la détermination comprend :
déterminer, par l'application UI à moteur d'exécution (118) en fonction de l'objet commercial (124), si le traitement par l'application commerciale (114) de la première saisie de champ est requis pour déterminer un second champ mis à jour de l'interface utilisateur (150) ; et
si le traitement par l'application commerciale (114) de la première saisie de champ est requis pour déterminer un second champ mis à jour, alors déterminer si l'émission du second champ mis à jour de l'UI à moteur d'exécution vers l'application client (122) est requise avant réalisation de la transaction commerciale.

5. Procédé selon la revendication 4, comprenant en outre :
suspendre temporairement ou cesser la communication entre l'UI à moteur d'exécution et l'application commerciale (114) jusqu'après réalisation de la transaction commerciale si le traitement par l'application commerciale (114) de la première saisie de champ n'est pas requis ou si l'émission du second champ mis à jour de l'UI à moteur d'exécution vers l'application client (122) n'est pas requise avant réalisation de la transaction commerciale.

6. Procédé selon l'une quelconque des revendications précédentes, dans lequel la réalisation de la transaction commerciale est indiquée à l'UI à moteur d'exécution par l'UI à moteur d'exécution recevant une requête de réaliser la transaction commerciale de l'application client (122).

7. Procédé selon l'une quelconque des revendications précédentes, dans lequel la réalisation de la transaction commerciale est indiquée à l'UI à moteur d'exécution par l'UI à moteur d'exécution recevant de l'application client (122) une indication qu'un utilisateur a sélectionné une requête de soumission ou un bouton de soumission (170) pour la transaction commerciale.

8. Procédé selon l'une quelconque des revendications précédentes, comprenant en outre réaliser la communication aller-retour, y compris :
envoyer une requête de l'application UI à moteur d'exécution (118) à l'application commerciale (114) pour traiter la première saisie de champ afin d'obtenir le second champ mis à jour de l'interface utilisateur (150) ; et recevoir une réponse par l'application UI à moteur d'exécution (118) de l'application commerciale (114) qui inclut le second champ mis à jour de l'application utilisateur.

9. Procédé selon l'une quelconque des revendications précédentes, dans lequel l'objet commercial (124) inclut un ou plusieurs noeuds (126, 136), dans lequel le premier champ de l'interface utilisateur (150) correspond à un premier attribut d'un des noeuds (126, 136) de l'objet commercial (124), en outre dans lequel l'objet commercial (124) inclut une indication que le traitement du premier attribut est requis par l'application commerciale (144) avant réalisation de la transaction commerciale.

10. Procédé selon la revendication 9, dans lequel un sous-attribut du premier attribut indique que le traitement du premier attribut est requis par l'application commerciale (114) avant réalisation de la transaction commerciale.

11. Produit de programme informatique, le produit de programme informatique étant mis en oeuvre de manière tangible sur un support de stockage lisible par ordinateur et incluant du code exécutable qui, lors de son exécution, est configuré pour amener au moins un appareil de traitement de données (110) à réaliser un procédé selon l'une quelconque des revendications précédentes.

12. Appareil (110) comprenant :
de la logique de fourniture (210) configurée pour fournir une interface utilisateur (150) depuis une application d'interface utilisateur, UI, à moteur d'exécution (118) tournant sur un serveur frontal (116) à une application client (122) qui tourne sur un ordinateur hôte (120) ;
de la logique de réception (220) configurée pour recevoir, par l'application UI à moteur d'exécution (118) d'une application commerciale (114) tournant sur un serveur dorsal (112), un objet commercial (124) qui inclut des métadonnées associées à l'interface utilisateur (150) ;
la logique de réception (220) étant en outre configurée pour recevoir, par l'application UI à moteur d'exécution (118) de l'application client (122), une saisie d'utilisateur associée à une transaction commerciale, la saisie d'utilisateur incluant une saisie d'un premier champ pour l'interface utilisateur (150) ;
de la logique de détermination (230) configurée pour déterminer, par l'application UI à moteur d'exécution (118) en fonction de l'objet commercial (124), si le traitement par l'application commerciale (114) de la première saisie de champ est requis pour déterminer et émettre vers l'application client (122) un second champ mis à jour de l'interface utilisateur (150) avant réalisation de la transaction commerciale, dans lequel la détermination comprend déterminer, par l'application UI à moteur d'exécution (118) en fonction de l'objet commercial (124), si une validation du premier champ par l'application commerciale (114) est requise avant réalisation de la transaction commerciale ; et
de la logique de déclenchement (240) configurée pour déclencher une communication aller-retour entre l'application UI à moteur d'exécution (118) et l'application commerciale (114) pour traiter le premier champ et déterminer le second champ mis à jour avant réalisation de la transaction commerciale si le traitement est requis par l'application commerciale (114) pour déterminer et émettre le second champ mis à jour avant réalisation de la transaction commerciale.
